(19) Europäisches Patentamt
European Patent Office
Office européen des brevets

(11) **EP 2 903 130 B1**

(12) **EUROPEAN PATENT SPECIFICATION**

(45) Date of publication and mention
of the grant of the patent:
**31.05.2017 Bulletin 2017/22**

(51) Int Cl.:
***H02J 50/05*** *(2016.01)*

(21) Application number: **12885305.8**

(22) Date of filing: **25.09.2012**

(86) International application number:
**PCT/JP2012/074522**

(87) International publication number:
**WO 2014/049683 (03.04.2014 Gazette 2014/14)**

(54) **ELECTROSTATICALLY-COUPLED NON-CONTACT POWER SUPPLY DEVICE AND CONTROL METHOD FOR SAME**

ELEKTROSTATISCH GEKOPPELTE KONTAKTLOSE STROMVERSORGUNGSVORRICHTUNG UND STEUERUNGSVERFAHREN DAFÜR

DISPOSITIF D'ALIMENTATION ÉLECTRIQUE SANS CONTACT COUPLÉ ÉLECTROSTATIQUEMENT ET PROCÉDÉ DE COMMANDE POUR CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.08.2015 Bulletin 2015/32**

(73) Proprietor: **Fuji Machine Mfg. Co., Ltd.**
**Chiryu-shi**
**Aichi 472-8686 (JP)**

(72) Inventors:
 • **SAITO, Masaru**
  **Chiryu-shi, Aichi 472-8686 (JP)**
 • **TAKIKAWA, Shinji**
  **Chiryu-shi, Aichi 472-8686 (JP)**

 • **NOMURA, Takeshi**
  **Chiryu-shi, Aichi 472-8686 (JP)**

(74) Representative: **Grünecker Patent- und**
  **Rechtsanwälte**
  **PartG mbB**
  **Leopoldstraße 4**
  **80802 München (DE)**

(56) References cited:
**EP-A1- 1 689 062** **EP-A2- 2 375 568**
**WO-A1-2011/033660** **JP-A- 2009 089 520**
**JP-A- 2009 296 857** **JP-A- 2010 233 442**
**JP-A- 2012 070 614** **US-A1- 2009 184 950**
**US-A1- 2009 302 690**

**Description**

Technical Field

The present invention relates to an electrostatic coupling type contactless electric power supply device which supplies electricity in a contactless manner to a current consumer on a movable section using electrodes and control method thereof, in particular, it relates to a control method and control device which controls a high-frequency power source section according to changes in the operating condition of the current consumer.

Background Art

For board manufacturing equipment for producing boards mounted with multiple components, there are solder printing machines, component mounters, reflow machines, board inspection machines and so on, and there are many cases in which these are configured into board producing lines by linking them with a board conveyance device. Many of these board manufacturing equipment are equipped with a movable section which performs work after moving to a specified position above the board, and a linear motor device can be used as a means for driving the movable section. A linear motor device is typically comprised of a track member with multiple magnets with alternating N poles and S poles arranged along the moving direction, and a movable section which includes an armature with a core and coil. In order to supply electricity to a current consumer on the movable section such as a linear motor device, a deformable cable for supplying electricity has been used. Also, in recent years, in order to reduce negative effects such as risks of disconnections from metal fatigue and the load weight capacity increasing due to power supply cables, contactless electric power supply devices have been proposed.

For the contactless electric power supply device method, an electromagnetic induction method using a coil has been used a lot, but recently electrostatic coupling methods using a capacitor configuration with opposing electrode plates have become used, and there are other methods such as magnetic field resonance and so on being evaluated. No matter the method used, it is important to increase the electric power supply efficiency, and technology for large current flows for series resonant circuits for the entire contactless electric power circuit, and technology to improve the impedance matching at the electric supply point and such have been proposed. In addition, for contactless electric power supply devices, in order to follow changes in the current consumer on the movable section, there are many cases of variably adjusting the output frequency and output voltage of the high-frequency power source section on the fixed section side.

US 2009/0302690 A1 discloses an electrostatic power supply device comprising an inductor forming a series resonant circuit with the electrodes for the power supply. The transformed power is monitored and the frequency of the transferred power is controlled to maximise the transferred power.

A technological example of a contactless electric power supply device of this type is disclosed in patent literature 1. The wireless electric power supply system of patent literature 1 is essentially designed to impedance match at the electric supply point and is applicable mostly for an electromagnetic resonance type (magnetic field resonance type) contactless electric power supply device. In claim 1 of patent literature 1, a form of electric power supply device which has an electric power generation section, power transmission element, impedance detection section of the electric power supply side, impedance variable force matching section, impedance characteristic memory section, and control section is disclosed, such that it is possible to variably adjust the output impedance of the electric power supply side.

Citation List

Patent Literature 1: Japanese Unexamined Patent Application Publication Number 2011-223739

Summary of Invention

Problem to be Solved by the Invention

Note that, for the system from patent literature 1, because contactless electric power supply is provided by the magnetic field resonance method for comparatively long distances, it is necessary to match the impedance. However, when providing contactless electric power supply over comparatively short distances by the electrostatic coupling method and electromagnetic induction method, it is conventional to raise the electric power supply efficiency using series resonant circuits, but if the system from patent literature 1 is adopted, costs become comparatively high due to the excessive device configuration.

Conversely, the electric power supply efficiency changes depending on changes in the operating condition of the current consumer and changes in the resonance state for the circuit for the electrostatic coupling method and electromagnetic induction method. It follows that, it is desirable to detect the operating condition of the current consumer and resonance state for the circuit and so on, and based on this, variably control the output frequency and output voltage of the high-frequency power source section for the electric power supply side. However, if the detection circuit and communication section analogous to that in patent literature 1 is provided in the electric power receiving side, by that amount the configuration of the electric power receiving side becomes more complex and more massive. Here, because the electric power receiving side is conventionally set on the movable section, the movable section weight and size becomes a big hindrance for reducing the supplied electric power amount and equipment costs and so on.

In addition, if the operating condition of the current consumer and circuit resonance state is not detected, the actual contactless electric power supply condition becomes unknown and due to this, it is possible that the operation stability of the current consumer on the movable section is lowered, and operating speed is lowered.

The present invention has been made in consideration of the problems in the background art, and an object thereof is to provide a contactless electric power supply device in which, the operating condition of the current consumer and circuit resonance state on the movable section which is the target of the contactless electric power supply is detected at the fixed section side, the operating stability is higher, while simplifying the electric circuit on the movable section side, and the movable section is made smaller and lighter for reducing the supplied electric power and lowering equipment costs.

Means for Solving the Problem

The present invention of an electrostatic coupling type contactless electric power supply device from claim 1 which solves the above problems comprises: an electrode for electric power supply provided on a fixed section, a high-frequency power source section for supplying high frequency power to the electrode for electric power supply, an electrode for electric power reception for receiving high frequency power in a contactless manner which is facing and separated from the electrode for electric power supply and which is provided on a movable section that is movably mounted on the fixed section, a received electric power converting section which supplies electric power to a current consumer on the movable section after converting the high-frequency power which the electrode for electric power reception received, a resonance inductor forming a series resonant circuit of serially connected capacitors configured from the electrode for electric power supply and the electrode for electric power reception; wherein the electrostatic coupling type contactless electric power supply device further comprises: a voltage detection means that detects the traveling wave voltage of the traveling wave from the high-frequency power source section to the series resonant circuit and in the reverse direction the reflected wave voltage of the reflected wave provided between the high-frequency power source section and the series resonant circuit, an auxiliary voltage detection means that detects in a contactless manner the received voltage generated at the electrode for electric power reception provided on the fixed section, and a calculation control means that calculates the load side impedance from the voltage detection means based on the traveling wave voltage and the reflected wave voltage, determines the resonance state of the series resonant circuit based on the received voltage, and variably controls at least the output frequency or output voltage of the high-frequency power source section based on the load side impedance and the resonance state.

For the invention from claim 2, with respect to claim 1, the calculation control means calculates the load side impedance using at least one of the voltage reflection rate or voltage standing wave ratio, based on the traveling wave voltage, the reflected wave voltage, and the internal impedance of the high-frequency power source section.

For the invention from claim 3, with respect to claim 1 or claim 2, the calculation control means makes parameters of the load side impedance and output voltage of the high-frequency power source section and retains a frequency map for obtaining the target frequency value of the high-frequency power source section, and controls the output frequency so that it matches the obtained target frequency value by using the frequency map.

For the present invention from claim 4, with respect to claim 3, the calculation control means makes parameters of the load side impedance and output voltage of the high-frequency power source section and retains a voltage map for obtaining the target voltage value for the received voltage, and has the high-frequency power source section supply electric power that has an output frequency that matches the target frequency value and the obtained target voltage value using the voltage map, and when the received voltage does not match the target voltage value, finely adjusts the output frequency.

For the invention from claim 5, with respect to any of the claims from 1 to 4, the voltage detection means includes: a bidirectional coupler that is serially connected between the high-frequency power source section and the series resonant circuit, and a voltage measuring device that measures the traveling wave voltage and the reflected wave voltage separated by the bidirectional coupler.

For the invention from claim 6, with respect to any of the claims from 1 to 5, the auxiliary voltage detection means includes: an auxiliary electrode facing and separated from the electrode for electric power reception equipped in the fixed section, and a voltage measuring device for measuring the auxiliary voltage induced at the auxiliary electrode.

The present invention of a control method for an electrostatic coupling type contactless electric power supply device from claim 7 comprises: an electrode for electric power supply provided on a fixed section, a high-frequency power source section for supplying high frequency power to the electrode for electric power supply, an electrode for electric power reception for receiving high frequency power in a contactless manner which is facing and separated from the electrode for electric power supply and which is provided on a movable section that is movably mounted on the fixed section, a received electric power converting section which supplies electric power to a current consumer on the movable section after converting the high frequency power which the electrode for electric power reception received, a resonance inductor forming a series resonant circuit of serially connected capacitors configured from the electrode for electric power supply and the electrode for electric power reception; wherein the control method for the electrostatic coupling type contactless electric power supply device has: a voltage detection step that detects the traveling wave voltage of the traveling wave from the high-frequency power source section to the series resonant circuit and in the reverse direction the reflected wave voltage of the reflected wave between the high-frequency power source section and the series resonant circuit, an auxiliary voltage detection step that detects in a contactless manner the received voltage generated at the electrode for electric power reception on the fixed section, and a calculation control step that calculates the load side impedance including the series resonant circuit based on the traveling wave voltage and the reflected wave voltage, determines the resonance state of the series resonant circuit based on the received voltage, and variably controls at least the output frequency or output voltage of the high-frequency power source section based on the load side impedance and the resonance state.

Effects of the Invention

For the present invention from claim 1, the reflected wave voltage which is detected by the voltage detection means changes depending on changes in the operating condition of the current consumer and changes in the resonance state of the series resonant circuit. In addition, the received voltage for the electrode for electric power reception detected by the auxiliary voltage detection means in a contactless manner changes depending on changes in the resonance state of the series resonant circuit. It follows that, the calculation control means calculates the load side impedance based on the traveling wave voltage and reflected wave voltage, and by determining the resonance state of the series resonant circuit based on the received voltage, the operating condition of the current consumer and resonance state of the series resonant circuit can be known. Furthermore, the calculation control means can raise the stability of the operation for the current consumer on the movable section by maintaining a high electric power supply efficiency from variably controlling the high-frequency power source section based on the known condition.

And, different from patent literature 1, the voltage detection means, auxiliary voltage detection means, and calculation control means can all be provided on the fixed section side. It follows that, the electric circuit of the movable section side can be simplified and the movable section can be made smaller and lighter. In addition, the supplied electric power amount for device 1 can be reduced and the costs for the device can be lowered.

For the present invention from claim 2, the calculation control means calculates the load side impedance using at least one of the voltage reflection rate or voltage standing wave ratio, based on the traveling wave voltage, the reflected wave voltage, and the internal impedance of the high-frequency power source section. The operating condition of the current consumer can be indicated by changes of the load side impedance on the equivalent circuit. In addition, the size of the reflected wave voltage depends on the relationship of the load side impedance and the internal impedance of the high-frequency power source section. And this relationship can be represented by using at least the voltage reflection rate or voltage standing wave ratio. It follows that, the calculation control means can obtain the load side impedance by using the calculation of at least one and can know the operating condition of the current consumer.

For the present invention from claim 3, the calculation control means makes parameters of the load side impedance and output voltage of the high-frequency power source section and retains a frequency map for obtaining the target frequency value of the high-frequency power source section, and controls the output frequency so that it matches the obtained target frequency value by using the frequency map. In other words, the calculation control means variably controls the output frequency of the high-frequency power source section based on changes in the load side impedance. According to this, it is possible to maintain a satisfactorily high electric power supply efficiency for the resonance state of the series resonant circuit based on the operating condition of the current consumer.

For the present invention from claim 4, the calculation control means holds a voltage map in addition to a frequency map, and has the high-frequency power source section supply electric power that has an output frequency that matches the target frequency value, and when the received voltage does not match the target voltage value, finely adjusts the output frequency. In other words, by controlling the optimum target frequency value by calculating from the frequency map, generally the received voltage of the electrode for electric power reception will roughly match the target voltage value, but there are cases in which the received voltage is outside of the target voltage value due to unexpected causes. For this case, it is determined that the output frequency is deviated from the actual resonance frequency, and the output frequency is finely adjusted without being limited to the target frequency value. According to this, even when unexpected causes occur, it is possible to maintain a satisfactory resonance state of the series resonant circuit, and maintain the high electric power supply efficiency so that the specified received voltage occurs.

For the present invention from claim 5, the voltage detection means comprises a bidirectional coupler and voltage measuring device. In this way, the traveling wave voltage and reflected wave voltage are measured by a combination of general equipment on the fixed section side, and because the load side impedance is calculated based on the measured value, this contributes to the possibility of reducing the equipment cost.

For the present invention from claim 6, the auxiliary voltage detection means comprises: an auxiliary electrode facing and separated from the electrode for electric power reception equipped in the fixed section, and a voltage measuring device for measuring the auxiliary voltage induced at the auxiliary electrode. In this way, because the received voltage for the movable section side is measured in a contactless manner by a combination of general equipment on the fixed section side, this contributes to the possibility of reducing the equipment cost.

With the invention of a control method for an electrostatic coupling type contactless electric power supply device from claim 7, there is a voltage detection step, an auxiliary voltage detection step, and a calculation control step, and these give rise to the same effects as the invention for the device of claim 1. The present invention can be implemented as a method invention as well as a machine invention.

Brief Description of Drawings

[FIG. 1]
This is a perspective view showing the overall configuration of a component mounter which can use the electrostatic coupling type contactless electric power supply device of the present invention.

[FIG. 2]
This is a configuration block diagram to illustrate an embodiment of the electrostatic coupling type contactless electric power supply device.

[FIG. 3]
This is an equivalent circuit diagram for the electric power supply circuit of the electrostatic coupling type contactless electric power supply device for the embodiment.

[FIG. 4]
This is a configuration block diagram to illustrate a conventional technology electrostatic coupling type contactless electric power supply device. Description of Embodiments

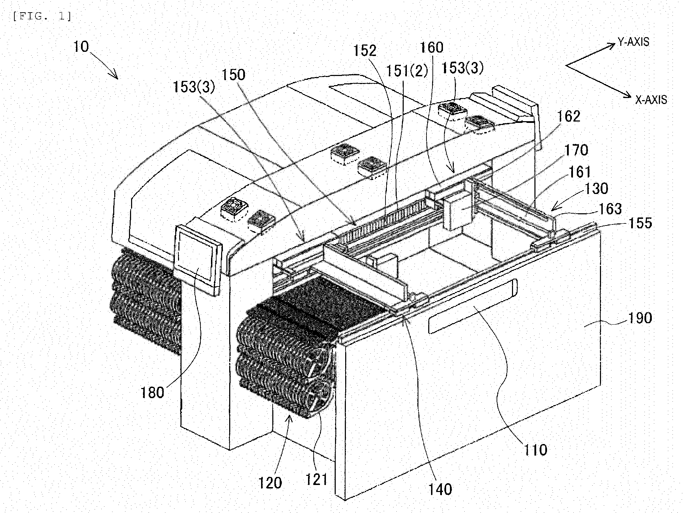

First, component mounter 10 which can use the present invention is described with reference to FIG. 1. FIG. 1 is a perspective view showing the overall configuration of component mounter 10 which can use electrostatic coupling type contactless electric power supply device of the present invention. Component mounter 10 is a device for mounting many components onto a board, and has a configuration in which two sets of component mounting units with the same construction are arranged largely with bilateral symmetry. Here, a component mounting unit with the cover removed at the front right side of FIG. 1 is described as an example. In the figure, the width of component mounter 10 going from the left rear side to the front right side is the X-axis direction, and the length of component mounter 10 is the Y-axis direction.

Component mounter 10 is configured with board conveyance device 110, component supply device 120, two component transfer devices 130 and 140, and so on assembled to base 190. Board conveyance device 110 is transversely in the X-axis direction around the center of the lengthwise direction of component mounter 10. Board conveyance device 110 uses a conveyor which is omitted from the figure and conveys boards in the X-axis direction. Also, board conveyance device 110 uses a clamp device which is omitted from the figure and secures and holds boards at a predetermined mounting work position. Component supply device 120 is provided at the front section (the left front side of FIG. 1) and at the rear section (cannot be seen in the FIG) in the lengthwise direction of component mounter 10. Component supply device 120 uses multiple cassette type feeders 121, and components are consecutively supplied to the two component transfer devices 130 and 140 from carrier tape set in each feeder 121.

The two component transfer devices 130 and 140 are what are known as XY-robot type devices, which can move in the X-axis direction and Y-axis direction. The two component transfer devices 130 and 140 are arranged facing each other at the front side and rear side of component mounter 10 in the lengthwise direction. To move each component transfer device 130 and 140 in the Y-axis direction, there is a linear motor device 150.

Linear motor device 150 comprises support rail 155 and track member 151 shared for the two component transfer devices 130 and 140 and linear movable section 153 for each of the two component transfer devices 130 and 140. Track member 151 corresponds to part of fixed section 2 of this invention, and extends in the Y-axis direction which is the moving direction for linear movable section 153. Track member 151 is arranged on the lower surface of the base of linear movable section 153, and side surfaces consists arranged on both sides of linear movable section 153, and is a groove shape in which an upper side is opened. On the internal facing side surfaces of track member 151, multiple magnets 152 are arranged in a row in the Y-axis direction.

Linear movable section 153 is movably mounted on track member 151. Linear movable section 153 which corresponds to movable section 3 of the invention, is comprised of movable main body section 160, X-axis rail 161, mounting head 170, and the like. Movable main body section 160 extends in the Y-axis direction, and an armature that generates driving force facing magnets 152 for track member 151 is arranged on both side surfaces. X-axis rail 161 extends in the X-axis direction from the movable main body section 160. End 162 of the X-axis rail 161 is connected to movable main body section 160, and the other end 163 is movably mounted on support rail 155, such that it moves integrally with movable main body section 160 in the Y-axis direction.

Component mounting head 170 is mounted on X-axis rail 161 such that it moves in the X-axis direction. Suction nozzles which are omitted from the figure are provided on the lower side of component mounting head 170. Suction nozzles use negative pressure generated by an air pump to pick up components from component supply device 120, is driven up/down and rotationally by a drive motor, and the picked up components are mounted on the printed circuit board at the mounting work position. The ball screw mechanism, which is omitted from the figure, mounted on X-axis rail 161 is driven by X-axis motor provided on movable main body section 160, and drives component mounting head 170 in the X-axis direction.

Component mounter 10 is also provided with display settings device 180 for exchanging information with operators, cameras for capturing images of boards and components which are omitted from the figure, and so on.

The X-axis motor as well as the armature on the movable main body section 160, and the air pump and drive motor and such on the component mounting head 170 are equivalent to current consumers for this invention. In addition, the sensors and control boards and such that are omitted from the explanations and figures on the linear movable section 153 also make up current consumers.

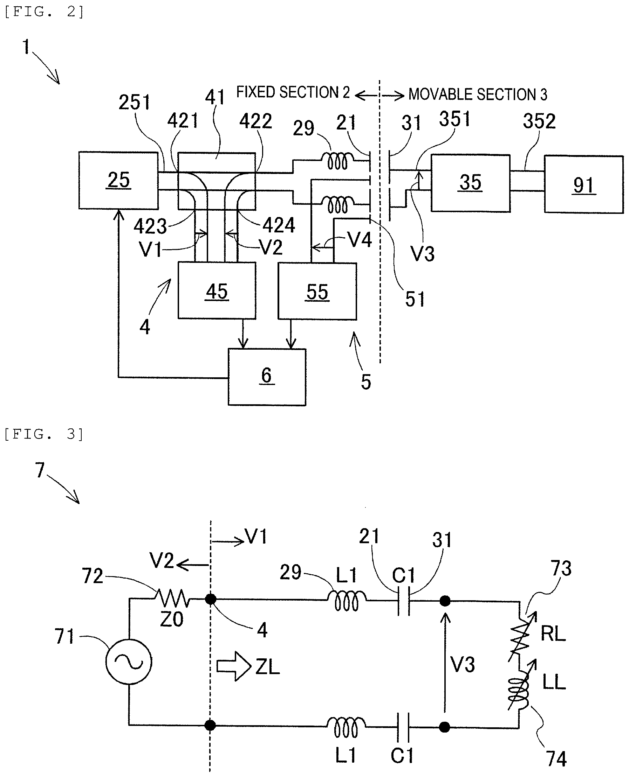

In order to supply electric power from fixed section 2 (track member 151) to the current consumer on movable section 3 (linear movable section 153), electrostatic coupling type contactless electric power supply device 1 of the embodiment for the present invention is configured. FIG. 2 is a configuration block diagram to illustrate an embodiment of electrostatic coupling type contactless electric power supply device 1. Electrostatic coupling type contactless electric power supply device 1 comprises electrode for electric power supply 21, high-frequency power source section 25, resonance inductor 29, electrode for electric power reception 31, received electric power converting section 35, voltage detection means 4, auxiliary voltage detection means 5, and calculation control means 6 and so on.

Two electrodes for electric power supply 21, provided on fixed section 2, are formed into long and narrow laminated bands from metal material. Electrode for electric power supply 21 is generally arranged over the entire length in the Y-axis direction (in a perpendicular direction from the page surface for FIG. 2) of track member 151 for fixed section 2.

High-frequency power source section 25 is established on fixed section 2 and outputs high frequency power. Two output terminals of high-frequency power source section 25 are connected to electrode for electric power supply 21 via the bidirectional coupler 41 mentioned below and resonance inductor 29 by electric wire 251. High-frequency power source section 25, for example, can be comprised of a direct current power source and four switching terminals which form a bridge circuit. According to this configuration, by variably controlling the control period of the switching terminals, high-frequency power source section 25 output frequency f can be variably controlled in a range of 100 kHz to MHz. It is acceptable for high-frequency power source section 25 output voltage V1 to be fixed, or to be variably controlled. The output voltage waveform may be exemplified by a rectangular wave which is a directly output voltage by switching, and by a sinusoidal wave created from entering a smoothing circuit in the output side of a bridge circuit, and the like.

Two electrodes for electric power reception 31 provided on movable section 3 are formed from metal material. Electrode for electric power reception 31 width size (up/down size in FIG. 2), which is perpendicular to the Y-axis direction, is larger than the width of electrode for electric power supply 21. Electrode for electric power reception 31 and electrode for electric power supply 21 have a large opposing surface area in order to obtain the prescribed electric power, and are arranged positioned facing and separated by a small distance. Due to this, the two electrodes for electric power reception 31 and electrodes for electric power supply 21 form two parallel plate capacitors. Even when movable section 3 is driven by linear motor device 150, a generally fixed separation distance is maintained, and a generally fixed electrostatic capacity amount C1 for the parallel plate capacitor is also maintained.

Received electric power converting section 35, provided on movable section 3, converts the high frequency power inputted from contactless electrode for electric power reception 31 and outputs it to current consumer 91. Current consumers 91 which are the power supply target of the contactless electric power supply are specifically the previously mentioned X-axis motor and armature of linear movable section 153, the air pump and drive motor on component mounting head 170, sensors, control boards, and the like. It is acceptable for the operating voltage of these multiple current consumers 91 to be different.

Received electric power converting section 35 input terminal is connected to electrode for electric power reception 31 by electric wire 351. Received electric power converting section 35 output terminal is connected to current consumer 91 by electric power supply wire 352. It is acceptable for current consumer 91 to be either a direct current consumer or an alternating current consumer and the amount of operating voltage is also not limited, but it is necessary for the received electric power converting section 35 to have a voltage output function that supports current consumer 91. In received electric power converting section 35, for example, a full wave rectifier circuit may be used to change the inputted high frequency power to direct current electric power, and an inverter circuit may be used to convert to commercial alternating current electric power and so on. When there is a difference in the operating voltage or frequency for multiple current consumers 91, a multiple output received electric power converting section 35 can be used.

Two resonance inductors 29 form a series resonant circuit serially connected to parallel plate capacitors configured from the electrode for electric power supply 21 and the electrode for electric power reception 31. Resonance inductor 29 typically uses a coil. Resonance inductors 29 are each connected between electrode for electric power supply 21 and bidirectional coupler 41 of the two electric wires 251 on fixed section 2 side. The inductance value $L_1$ for resonance inductor 29 is properly selected according to electrostatic capacity amount $C_1$ of the parallel plate capacitor. It is also acceptable to directly connect an inductor which has two inductance values $(2L_1)$ to one electric wire 251 as a substitute to two resonance inductors 29.

Voltage detection means 4 is provided between high-frequency power source section 25 and the series resonant circuit. Voltage detection means 4 detects the traveling wave voltage $V_1$ of the traveling wave in the direction from the high-frequency power source section 25 to series resonant circuit, and detects reflected wave voltage $V_2$ of the reflected wave in the reverse direction. Voltage detection means 4 is comprised of bidirectional coupler 41 which is connected between high-frequency power source section 25 and the series resonant circuit, as well as voltage detection device 45.

As shown in FIG. 2, the number one main terminal 421 of bidirectional coupler 41 is connected to high-frequency power source section 25, and number two main terminal 422 is connected to resonance inductor 29. In addition, the number one separation terminal 423 and number two separation terminal 424 of bidirectional coupler 41 are connected to voltage detection device 45. Between number one main terminal 421 and number two main terminal 422, all voltage is transmitted regardless of the traveling direction.

With respect to this, number one separation terminal 423 separates and outputs only the voltage in the direction of number two main terminal 422 from number one main terminal 421. In other words, output voltage $V_1$ output from high-frequency power source section 25 is separated and only the traveling wave voltage $V_1$ of the traveling wave towards the series resonant circuit is output. Conversely, even if there is voltage in the direction of number one main terminal 421 from number two main terminal 422, this is not output to number one separation terminal 423. On the other hand, number two separation terminal 424 separates and outputs only voltage in the direction of number one main terminal 421 from number two main terminal 422, in other words the reflected wave voltage $V_2$ of the reflected wave.

Voltage detection device 45 measures the traveling wave voltage $V_1$ of number one separation terminal 423, as well as reflected wave voltage $V_2$ of number two separation terminal 424, and sends the measured values to calculation control means 6. Voltage detection device 45, for example, can be comprised of AD converter device with two or more channels controlled from calculation control means 6, but it is not limited to this.

Auxiliary voltage detection means 5, provided on fixed section 2, detects received voltage $V_3$ generated in electrode for electric power reception 31 in a contactless manner. Auxiliary voltage detection means 5 is comprised of two auxiliary electrodes 51 facing and separated from each electrode for electric power reception 31 provided on fixed section 2, and voltage measuring device 55 which measures auxiliary voltage $V_4$ induced at auxiliary electrode 51.

Two auxiliary electrodes 51, are formed into long and narrow laminated bands in metal material, and run along side-by-side with each electrode for electric power supply 21, and are generally arranged over the entire length in the Y-axis direction (in a perpendicular direction from the page surface for FIG. 2) of track member 151. Auxiliary electrode 51 width size (up/down size in FIG. 2), which is perpendicular to the Y-axis direction, is roughly the same as the electrode for electric power reception 31 width size minus the electrode for electric power supply 21 width size. Electrode for electric power reception 31 and auxiliary electrode 51 maintain a prescribed opposing surface area and are arranged positioned facing and separated by a small distance. It follows that, the two electrodes for electric power reception 31 and auxiliary electrodes 51 form two auxiliary capacitors. Even when movable section 3 is driven by linear motor device 150, a generally fixed separation distance is maintained, and a generally fixed electrostatic capacity amount $C_2$ for the auxiliary capacitor is also maintained. In addition, auxiliary electrode 51 and electrode for electric power supply 21 do not form a capacitor because they are positioned on the same surface and are not facing each other, and it can be considered that the electrostatic capacity between both 51 and 21 is negligible.

Between the two auxiliary electrodes 51, induced voltage $V_4$ which is divided by received voltage $V_3$ generated in electrode for electric power reception 31 is induced. Because induced voltage $V_4$ is proportional to received voltage $V_3$, voltage measuring device 55 measures induced voltage $V_4$, and by multiplying the measured value with a reciprocal number of the partial pressure ratio, the received voltage $V_3$ can be obtained. Voltage measuring device 55 sends the received voltage $V_3$ measured value to calculation control means 6. Voltage measuring device 55, for example, can be comprised of AD converter device controlled from calculation control means 6, but it is not limited to this. In addition, it is acceptable for the voltage detection device 45 which measures traveling wave voltage V1 and reflected wave voltage V2, and voltage measuring device 55 which measures the induced voltage V4, to be integrated together.

Calculation control means 6 calculates load side impedance ZL, and determines the resonance state and variably controls at least the output frequency f of high-frequency power source section 25. Calculation control means 6, for example, can use an electronic control device that operates with software and has a built-in microcomputer. Calculation control means 6 first, calculates the load side impedance ZL based on the previously mentioned traveling wave voltage V1 and reflected wave voltage V2. The calculation method for the load side impedance ZL is explained in detail later using the equivalent circuit.

Calculation control means 6 then determines the resonance state of the series resonant circuit based on the received voltage V3; specifically it performs judgment using a voltage map. The voltage map is a table for obtaining target voltage value V3T of received voltage V3 with output voltage V1 of high-frequency power source section 25 and load side impedance ZL as parameters. Calculation control means 6 determines that the resonance state is favorable when the received voltage V3 generally matches the target voltage value V3T. Calculation control means 6, when the received voltage V3 is out of the target voltage value V3T, usually when the received voltage V3 is lower than the target voltage value V3T, determines that the resonance state is not favorable.

Calculation control means 6, for the third step, variably controls the output frequency f of high-frequency power source section 21 based on load side impedance ZL and the resonance state. Specifically, calculation control means 6 obtains the target frequency value fT using the frequency map, and then performs control so that the output frequency f matches this. The frequency map is a table for obtaining the target frequency value fT with output voltage V1 of high-frequency power source section 25 and load side impedance ZL as parameters.

Furthermore, calculation control means 6, when the resonance state is not favorable, finely adjusts the output frequency f. In other words, from the received voltage V3 being out of the target voltage value V3T for some unexpected reason, because it can be determined that the output frequency f has deviated from the actual resonance frequency, calculation control means 6 finely adjusts the output frequency f without being limited to the target frequency value fT.

In addition, the voltage map and frequency map can be created beforehand by investigations using actual component mounter 10 and by performing simulations imitating the electrical various amounts of component mounter 10 and such.

Next is the description about the actions of electrostatic coupling type contactless electric power supply device 1 of an embodiment configured like the above-mentioned. FIG. 3 is an equivalent circuit diagram 7 for the electric power supply circuit of electrostatic coupling type contactless electric power supply device 1 for the embodiment. In FIG. 3, high-frequency power source section 25 can be replaced by a series circuit of internal impedance 72 of impedance value Z0 and ideal voltage source 71. In addition, received electric power converting section 35 and current consumer 91 can be replaced by load resistance 73 for which resistance value RL changes based on operating condition changes and a series circuit of load inductance 74 for which inductance value LL changes.

Conversely, the two parallel plate capacitors formed from the two electrodes for electric power supply 21 and electrodes for electric power reception 31 are serially connected, and the total electrostatic capacity amount becomes half of the individual electrostatic capacity amount C1. In addition, two resonance inductors 29 are also serially connected, and the total inductance value is two times the individual inductance value L1. It follows that, load side impedance ZL seen from voltage detection means 4 can be obtained by the following formula 1. Furthermore, $\omega$ is the angular frequency multiplied by 2 $\pi$ to the output frequency f; j is an imaginary unit.

[Calculation 1]

$$ZL = j\omega\,(2L1 + LL) + \frac{1}{j\omega\left(\frac{C1}{2}\right)} + RL \quad \cdots\cdots\cdots\cdots\cdots\cdots (1)$$

Here, if internal impedance 72 of high-frequency power source section 25 is pure resistance, and received electric power converting section 35 and current consumer 91 can be regarded as pure resistance, inductance value LL becomes 0, and the following formula 2 becomes the series resonant condition.

[Calculation 2]

$$j\omega(2L1) = \frac{1}{j\omega\left(\frac{C1}{2}\right)} \quad \cdots\cdots\cdots\cdots\cdots\cdots\cdots\cdots\cdots\cdots\cdots\cdots\cdots (2)$$

If output frequency f is appropriately controlled by the resonance frequency and the series resonant condition of formula 2 is fulfilled, the imaginary portion for load side impedance ZL becomes zero. At this time, received voltage V3 generated in electrode for electric power reception 31 matches the output voltage V1 of high-frequency power source section 25. In addition, as the output frequency f deviates from resonance frequency, the imaginary portion of load side impedance ZL increases, and received voltage V3 gradually decreases. Due to this, calculation control means 6 can determine the resonance state from the increase and decrease of received voltage V3.

At actual component mounter 10, because current consumer 91 includes motors and such, load inductance 74 exists and affects the series resonant condition (inductance value LL does not equal 0). In order to decrease this effect and practically control the electric power supply, it is desirable to create beforehand the previously mentioned voltage map by investigations and simulations.

Next, voltage reflection rate Γ can be obtained by the following formula 3 using traveling wave voltage V1 and reflected wave voltage V2 detected in voltage detection means 4.

[Calculation 3]

$$\Gamma = \frac{V2}{V1} \quad\quad\quad \cdots\cdots\cdots\cdots\cdots\cdots\cdots\cdots\cdots\cdots (3)$$

In addition, voltage reflection rate Γ can also be indicated by the following formula 4.

[Calculation 4]

$$\Gamma = \frac{ZL - Z0}{ZL + Z0} \quad\quad\quad \cdots\cdots\cdots\cdots\cdots\cdots\cdots\cdots\cdots\cdots (4)$$

It follows that, the right side of formula 3 and the right side of formula 4 become equal, and from impedance value Z0 for internal impedance 72 being a known fixed value, load side impedance ZL can be obtained by calculating.

Here, if the inductance value L1 configuring series resonant circuit is a fixed value, and electrostatic capacity amount C1 is regarded as fixed, the resistance value RL which changes based on the operating condition of current consumer and the inductance value LL can be sequentially calculated. Further, based on these various amounts, output frequency f for target frequency value fT can be sequentially obtained to establish the series resonant condition. For this, calculation control means 6, calculates load side impedance ZL and obtains the appropriate target frequency value fT, and can suitably control output frequency f so that it matches this.

At actual component mounter 10, if movable section 3 is moved, the separation distance between electrode for electric power reception 31 and electrode for electric power supply 21 subtly changes and it can be considered that this affects electrostatic capacity amount C1. Considering the changes of electrostatic capacity amount C1 in this manner, it is desirable to create beforehand the previously mentioned frequency map.

Furthermore, when some unexpected cause occurs and the desired series resonance state cannot be obtained at the target frequency value fT, calculation control means 6 temporarily raises/lowers control of the output frequency f without adhering to target frequency value fT and obtains the optimum value, and performs control so that the size of received voltage V3 generally matches the target voltage value V3T. In addition, the effect of the unexpected cause is indicated at the equivalent circuit by changes of electrostatic capacity amount C1 or by changes in inductance value LL.

Furthermore, for reference purposes, voltage standing wave ratio VSWR can by obtained by the following formula 5 using voltage reflection rate Γ.

[Calculation 5]

$$VSWR = \frac{1 + \Gamma}{1 - \Gamma} = \frac{ZL}{Z0} \quad\quad\quad \cdots\cdots\cdots\cdots\cdots\cdots\cdots\cdots\cdots\cdots (5)$$

Here, by impedance value Z0 of internal impedance 72 of high-frequency power source section 25 generally being a known fixed value, voltage standing wave ratio VSWR is proportional to load side impedance ZL. It follows that, for parameters of the frequency map and voltage map, it is also possible to use voltage standing wave ratio VSWR as a substitute for load side impedance ZL.

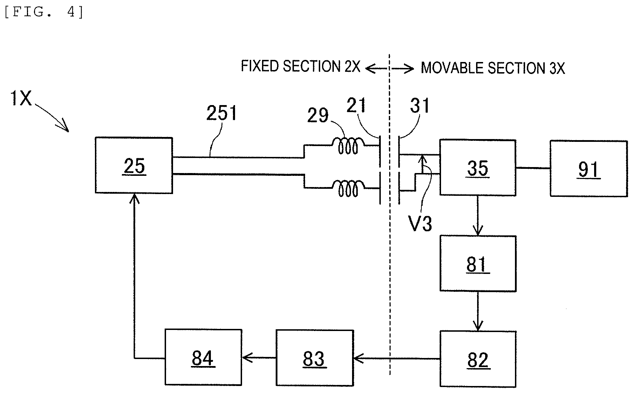

The following is a description of the effectiveness of embodiment of electrostatic coupling type contactless electric power supply device 1 compared to conventional technology. FIG. 4 is a configuration block diagram to illustrate a conventional technology electrostatic coupling type contactless electric power supply device 1X (hereafter abbreviated as conventional device 1X). For conventional device 1X, received electric power detection means 81 and transmitting circuit 82 are provided in movable section 3X, and receiving circuit 83 and control means 84 are provided in fixed section 2X. On the other hand, the embodiment voltage detection means 4, auxiliary voltage detection means 5, and calculation control means 6 are not provided in conventional device 1X.

At conventional device 1X, on the movable section 3X side, received electric power detection means 81 detects received voltage V3 of received electric power converting section 35 or the converted electric power, and transmits a detection signal to transmitting circuit 82. This detection signal is sent from transmitting circuit 82 on movable section 3X side to receiving circuit 83 on fixed section 2X side in a contactless manner using wireless signals or light. And, control means 84 variably controls the output frequency and output voltage of high-frequency power source section 25 based on the detection signal.

As can be seen with the comparison to conventional device 1X, in the embodiment electrostatic coupling type contactless electric power supply device 1, received electric power detection means 81 and transmitting circuit 82 on movable section 3 side are not necessary. From this, the electric circuit of the movable section 3 side can be simplified and the movable section can be made smaller and lighter. In addition, the supplied electric power amount for device 1 can be reduced and the costs can be lowered.

In addition, in the embodiment, output frequency f of high-frequency power source section 25 is variably controlled according to the resonance state determined based on the received voltage V3 and load side impedance ZL calculated based on traveling wave voltage V1 and reflected wave voltage V2. In addition, control can maintain a satisfactory resonance state for the series resonant circuit, even when unexpected factors occur, using a frequency map and voltage map. It follows that, for overall actions, a high electric power supply efficiency can be maintained, and the stability of the operating condition for the current consumer 91 on movable section 3 can be raised.

In addition, voltage detection means 4 is comprised of bidirectional coupler 41 and voltage measuring device 45, and auxiliary voltage detection means 5 is comprised of auxiliary electrode 51 and voltage measuring device 55. In this way, because the traveling wave voltage V1, reflected wave voltage V2, and received voltage V3 of movable section 3 are measured by a combination of general equipment on fixed section 2 side, the device 1 cost can be lowered.

Further, the present invention is not just for device 1, but can also be implemented as a contactless electric power supply control method. In addition, it is acceptable for high-frequency power source section 25 to control not just output frequency f but also output voltage V1. Furthermore, for voltage detection means 4 and auxiliary voltage detection means 5, so long as they are provided on fixed section 2 side, it is acceptable for the internal configuration to be different. Various other applications and modifications are possible.

Industrial Applicability

The electrostatic coupling type contactless electric power supply device is not limited to use just in board manufacturing equipment including component mounters, further, it can also be used in a wide field of industrial working apparatuses for other industries which have movable sections and require contactless electric power supply. Furthermore, this can be applied to provide contactless electric power to a running train without the use of a pantograph and such, and it can be also used to provide contactless electric power from a road surface to a running electric automobile.

Reference Signs List

1, 1X: Electrostatic coupling type contactless electric power supply device; 2, 2X: Fixed section; 21: Electrode for electric power supply; 25: High-frequency power source section; 29: Resonance inductor; 3, 3X: Movable section; 31: Electrode for electric power reception; 35: Received electric power converting section; 4: Voltage detection means; 41: Bidirectional coupler; 45: Voltage detection device; 5: Auxiliary voltage detection means; 51: Auxiliary electrode; 55: Voltage measuring device; 6: Calculation control means; 71: Ideal voltage source; 72: Internal impedance; 73: Load resistance; 74: Load inductance; 81: Received electric power detection means; 82: Transmitting circuit; 83: Receiving circuit; 84: Control means; 91: Current consumer; 10: Component mounter; 110: Board conveyance device; 120: Component supply device; 130, 140: Component transfer device; 150: Linear motor device; 151: Track member; 160: Movable main body section; 161: X-axis rail; 170: Mounting head; 180: Display settings device; 190: Base; V1: Traveling wave voltage (High-frequency power source section output voltage); V2: Reflected wave voltage; V3: Received voltage; V4: Auxiliary voltage; ZL: Load side impedance; Z0: Internal impedance

**Claims**

1.  An electrostatic coupling type contactless electric power supply device (1) comprising: an electrode (21) for electric power supply provided on a fixed section (2), a high-frequency power source section (25) for supplying high frequency power to the electrode (21) for electric power supply, an electrode (31) for electric power reception for receiving high frequency power in a contactless manner which is facing and separated from the electrode for electric power supply and which is provided on a movable section (3) that is movably mounted on the fixed section, a received electric power converting section (35) which supplies electric power to a current consumer (91) on the movable section after converting the high-frequency power which the electrode for electric power reception received, a resonance inductor (29) forming a series resonant circuit of serially connected capacitors (C1) configured from the electrode for electric power supply and the electrode for electric power reception; wherein the electrostatic coupling type contactless electric power supply device further comprises: a voltage detection means (4) that detects the traveling wave voltage (V1) of the traveling wave from the high-frequency power source section to the series resonant circuit (29) and in the reverse direction the reflected wave voltage (V2) of the reflected wave provided between the high-frequency power source section and the series resonant circuit, an auxiliary voltage detection means (5) that detects in a contactless manner the received voltage (V3) generated at the electrode (31) for electric power reception provided on the fixed section, and a calculation control means (6) that calculates the load side impedance (ZL) from the voltage detection means based on the traveling wave voltage and the reflected wave voltage, determines the resonance state of the series resonant circuit based on the received voltage, and variably controls at least the output frequency or output voltage of the high-frequency power source section based on the load side impedance and the resonance state.

2. An electrostatic coupling type contactless electric power supply device with respect to claim 1, wherein the calculation control means (6) calculates the load side impedance (ZL) using at least one of the voltage reflection rate or voltage standing wave ratio, based on the traveling wave voltage (V1), the reflected wave voltage (V2), and the internal impedance (Z0) of the high-frequency power source section.

3. An electrostatic coupling type contactless electric power supply device with respect to claim 1 or claim 2, wherein the calculation control means (6) makes parameters of the load side impedance (ZL) and output voltage (V1) of the high-frequency power source section and retains a frequency map for obtaining the target frequency value of the high-frequency power source section, and controls the output frequency so that it matches the obtained target frequency value by using the frequency map.

4. An electrostatic coupling type contactless electric power supply device with respect to claim 3, wherein the calculation control means (6) makes parameters of the load side impedance (ZL) and output voltage (V1) of the high-frequency power source section and retains a voltage map for the target voltage value for the received voltage (V3), and has the high-frequency power source section supply electric power that has an output frequency that matches the target frequency value and the obtained target voltage value using the voltage map, and when the received voltage does not match the target voltage value, finely adjusts the output frequency.

5. An electrostatic coupling type contactless electric power supply device with respect to any of the claims from 1 to 4, wherein the voltage detection means (4) includes: a bidirectional coupler (41) that is serially connected between the high-frequency power source section (25) and the series resonant circuit (29), and a voltage measuring device (45) that measures the traveling wave voltage (V1) and the reflected wave voltage (v2) separated by the bidirectional coupler.

6. An electrostatic coupling type contactless electric power supply device with respect to any of the claims from 1 to 5, wherein the auxiliary voltage detection means (5) includes: an auxiliary electrode (51) facing and separated from the electrode (31) for electric power reception equipped in the fixed section, (2) and a voltage measuring device (55) for measuring the auxiliary voltage (V4) induced at the auxiliary electrode (51).

7. A control method for an electrostatic coupling type contactless electric power supply device (1) comprising: an electrode (21) for electric power supply provided on a fixed section (2), a high-frequency power source section (25) for supplying high frequency power to the electrode for electric power supply, an electrode (31) for electric power reception for receiving high frequency power in a contactless manner which is facing and separated from the electrode for electric power supply and which is provided on a movable section (3) that is movably mounted on the fixed section, a received electric power converting section (35) which supplies electric power to a current consumer (91) on the movable section after converting the high frequency power which the electrode for electric power reception received, a resonance inductor (29) forming a series resonant circuit of serially connected capacitors (C1) configured from the electrode for electric power supply and the electrode for electric power reception; wherein the control method for the electrostatic coupling type contactless electric power supply device has: a voltage detection step that detects the traveling wave voltage (V1) of the traveling wave from the high-frequency power source section to the series resonant circuit and in the reverse direction the reflected wave voltage (V2) of the reflected wave between the high-frequency power source section (25) and the series resonant circuit (29), an auxiliary voltage detection step that detects in a contactless manner the received voltage (V3) generated at the electrode for electric power reception on the fixed section, and a calculation control step that calculates the load side impedance (ZL) including the series resonant circuit based on the traveling wave voltage and the reflected wave voltage, determines the resonance state of the series resonant circuit based on the received voltage, and variably controls at least the output frequency or output voltage of the high-frequency power source section based on the load side impedance and the resonance state.

**Patentansprüche**

1. Kontaktlose Stromversorgungsvorrichtung (1) vom elektrostatischen Kopplungstyp, umfassend:

   eine Elektrode (21) für die Stromversorgung, die an einem festen Abschnitt (2) bereitgestellt ist;
   einen Hochfrequenz-Stromquellenabschnitt (25) zum Zuführen von Hochfrequenzstrom zu der Elektrode (21) für die Stromversorgung,
   eine Elektrode (31) für die Stromaufnahme zum Aufnehmen von Hochfrequenzstrom auf kontaktlose Weise, die zu der Elektrode für die Stromversorgung ausgerichtet und von dieser getrennt ist und die an einem beweglichen Abschnitt (3) bereitgestellt ist, der beweglich an dem festen Abschnitt montiert ist,
   einen Umwandlungsabschnitt (35) für aufgenommenen Strom, der Strom zu einem Stromverbraucher (91) an dem beweglichen Abschnitt leitet, nachdem der Hochfrequenzstrom umgewandelt wurde, den die Elektrode für die Stromaufnahme aufgenommen hat,
   eine Resonanzinduktionsspule (29), die eine resonante Reihenschaltung aus in Reihe geschalteten Kondensatoren (C1) bildet, die aus der Elektrode für die Stromversorgung und der Elektrode für die Stromaufnahme konfiguriert ist,
   wobei die kontaktlose Stromversorgungsvorrichtung vom elektrostatischen Kopplungstyp des Weiteren umfasst:

   ein Spannungsermittlungsmittel (4), das die Wanderwellenspannung (V1) der Wanderwelle von dem Hochfrequenz-Stromquellenabschnitt zu der resonanten Reihenschaltung (29) und in der umgekehrten Richtung die reflektierte Wellenspannung (V2) der reflektierten Welle ermittelt, die zwischen dem Hochfrequenz-Stromquellenabschnitt und der resonanten Reihenschaltung vorhanden ist,
   ein Hilfsspannungsermittlungsmittel (5), das auf kontaktlose Weise die aufgenommene Spannung (V3) ermittelt, die an der Elektrode (31) für die Stromaufnahme erzeugt wird, die an dem festen Abschnitt vorhanden ist, und ein Berechnungssteuerungsmittel (6), das die lastseitige Impedanz (ZL) von dem Spannungsermittlungsmittel basierend auf der Wanderwellenspannung und der reflektierten Wellenspannung berechnet, den Resonanzzustand der resonanten Reihenschaltung basierend auf der empfangenen Spannung bestimmt und variabel mindestens die Ausgangsfrequenz oder die Ausgangsspannung des Hochfrequenz-Stromquellenabschnitts basierend auf der lastseitigen Impedanz und dem Resonanzzustand steuert.

2. Kontaktlose Stromversorgungsvorrichtung vom elektrostatischen Kopplungstyp nach Anspruch 1, wobei das Berechnungssteuerungsmittel (6) die lastseitige Impedanz (ZL) unter Verwendung von mindestens einem aus der Spannungsreflexionsrate oder dem Spannungsstehwellenverhältnis berechnet, basierend auf der Wanderwellenspannung (V1), der reflektierten Wellenspannung (V2) und der internen Impedanz (Z0) des Hochfrequenz-Stromquellenabschnitts.

3. Kontaktlose Stromversorgungsvorrichtung vom elektrostatischen Kopplungstyp nach Anspruch 1 oder 2, wobei das Berechnungssteuerungsmittel (6) Parameter aus der lastseitigen Impedanz (ZL) und der Ausgangsspannung (V1) des Hochfrequenz-Stromquellenabschnitts macht und einen Frequenzplan enthält, um den Zielfrequenzwert des Hochfrequenz-Stromquellenabschnitts abzurufen, und die Ausgangsfrequenz so steuert, dass sie mit dem unter Verwendung des Frequenzplans abgerufenen Zielfrequenzwert übereinstimmt.

4. Kontaktlose Stromversorgungsvorrichtung vom elektrostatischen Kopplungstyp nach Anspruch 3, wobei das Berechnungssteuerungsmittel (6) Parameter aus der lastseitigen Impedanz (ZL) und der Ausgangsspannung (V1) des Hochfrequenz-Stromquellenabschnitts macht und einen Spannungsplan für den Zielspannungswert für die aufgenommene Spannung (V3) enthält, und den Hochfrequenz-Stromquellenabschnitt Strom mit einer Ausgangsfrequenz zuführen lässt, die mit dem Zielfrequenzwert und dem unter Verwendung des Spannungsplans abgerufenen Zielspannungswert übereinstimmt, und wenn die aufgenommene Spannung nicht mit dem Zielspannungswert übereinstimmt, die Ausgangsfrequenz fein einstellt.

5. Kontaktlose Stromversorgungsvorrichtung vom elektrostatischen Kopplungstyp nach einem der Ansprüche 1 bis 4, wobei das Spannungsermittlungsmittel (4) beinhaltet:

einen bidirektionale Koppler (41), der zwischen dem Hochfrequenz-Stromquellenabschnitt (25) und der resonanten Reihenschaltung (49) in Reihe geschaltet ist, und

eine Spannungsmessungsvorrichtung (45), welche die Wanderwellenspannung (V1) und die durch den bidirektionalen Koppler getrennte reflektierte Wellenspannung (V2) misst.

6. Kontaktlose Stromversorgungsvorrichtung vom elektrostatischen Kopplungstyp nach einem der Ansprüche 1 bis 5, wobei das Hilfsspannungsermittlungsmittel (5) beinhaltet:

eine Hilfselektrode (51), die zu der Elektrode (31) für die Stromaufnahme ausgerichtet und von dieser getrennt ist, die in dem festen Abschnitt (2) angeordnet ist, und

eine Spannungsmessungsvorrichtung (55) zum Messen der Hilfsspannung (V4), die in der Hilfselektrode (51) induziert wird.

7. Steuerverfahren für eine kontaktlose Stromversorgungsvorrichtung (1) vom elektrostatischen Kopplungstyp, umfassend:

eine Elektrode (21) für die Stromversorgung, die an einem festen Abschnitt (2) bereitgestellt ist;

einen Hochfrequenz-Stromquellenabschnitt (25) zum Zuführen von Hochfrequenzstrom zu der Elektrode für die Stromversorgung,

eine Elektrode (31) für die Stromaufnahme zum Aufnehmen von Hochfrequenzstrom auf kontaktlose Weise, die zu der Elektrode für die Stromversorgung ausgerichtet und von dieser getrennt ist und die an einem beweglichen Abschnitt (3) bereitgestellt ist, der beweglich an dem festen Abschnitt montiert ist,

einen Umwandlungsabschnitt (35) für aufgenommenen Strom, der Strom zu einem Stromverbraucher (91) an dem beweglichen Abschnitt leitet, nachdem der Hochfrequenzstrom umgewandelt wurde, den die Elektrode für die Stromaufnahme aufgenommen hat,

eine Resonanzinduktionsspule (29), die eine resonante Reihenschaltung aus in Reihe geschalteten Kondensatoren (C1) bildet, die aus der Elektrode für die Stromversorgung und der Elektrode für die Stromaufnahme konfiguriert ist,

wobei das Steuerverfahren für die kontaktlose Stromversorgungsvorrichtung vom elektrostatischen Kopplungstyp aufweist:

einen Spannungsermittlungsschritt, der die Wanderwellenspannung (V1) der Wanderwelle von dem Hochfrequenz-Stromquellenabschnitt zu der resonanten Reihenschaltung und in der umgekehrten Richtung die reflektierte Wellenspannung (V2) der reflektierten Welle zwischen dem Hochfrequenz-Stromquellenabschnitt (25) und der resonanten Reihenschaltung (29) ermittelt,

einen Hilfsspannungsermittlungsschritt, der auf kontaktlose Weise die aufgenommene Spannung (V3) ermittelt, die an der Elektrode für die Stromaufnahme an dem festen Abschnitt erzeugt wird, und

einen Berechnungssteuerungsschritt, der die lastseitige Impedanz (Z11) einschließlich der resonanten Reihenschaltung basierend auf der Wanderwellenspannung und der reflektierten Wellenspannung berechnet, den Resonanzzustand der resonanten Reihenschaltung basierend auf der aufgenommenen Spannung bestimmt, und variabel mindestens die Ausgangsfrequenz oder die Ausgangsspannung des Hochfrequenz-Stromquellenabschnitts basierend auf der lastseitigen Impedanz und dem Resonanzzustand steuert.

**Revendications**

1. Dispositif (1) d'alimentation en énergie électrique sans contact, du type à couplage électrostatique, comprenant :

une électrode (21) d'alimentation en énergie électrique placée sur une section fixe (2), une section (25) de source d'énergie haute fréquence destinée à alimenter en énergie haute fréquence l'électrode (21) d'alimentation en énergie électrique,

une électrode (31) de réception d'énergie électrique destinée à recevoir de l'énergie haute fréquence sans contact, qui est située en face, et à une distance, de l'électrode d'alimentation en énergie électrique et qui est placée sur une section mobile (3) qui est montée de manière mobile sur la section fixe,

une section (35) de conversion d'énergie électrique reçue qui fournit de l'énergie électrique à un consommateur de courant (91) sur la section mobile après avoir converti l'énergie haute fréquence reçue par l'électrode de réception d'énergie électrique,

une inductance de résonance (29) formant un circuit résonant série de condensateurs (C1) montés en série configurés depuis l'électrode d'alimentation en énergie électrique et l'électrode de réception d'énergie électrique ;

dans lequel le dispositif d'alimentation en énergie électrique sans contact, du type à couplage électrostatique, comprend, en outre :

un moyen de détection de tension (4) qui détecte la tension d'onde progressive (V1) de l'onde progressive circulant de la section de source d'énergie haute fréquence vers le circuit résonant série (29) et, dans le sens contraire, la tension d'onde réfléchie (V2) de l'onde réfléchie circulant entre la section de source d'énergie haute fréquence et le circuit résonant série,

un moyen de détection de tension auxiliaire (5) qui détecte, sans contact, la tension reçue (V3) générée aux bornes de l'électrode (31) de réception d'énergie électrique placée sur la section fixe, et

un moyen de commande de calcul (6) qui calcule l'impédance côté charge (ZL) à partir du moyen de détection de tension sur la base de la tension d'onde progressive et de la tension d'onde réfléchie, détermine l'état de résonance du circuit résonant série sur la base de la tension reçue, et commande de manière variable au moins la fréquence de sortie ou la tension de sortie de la section de source d'énergie haute fréquence sur la base de l'impédance côté charge et de l'état de résonance.

2. Dispositif d'alimentation en énergie électrique sans contact, du type à couplage électrostatique, selon la revendication 1, dans lequel le moyen de commande de calcul (6) calcule l'impédance côté charge (ZL) en utilisant au moins le rapport de réflexion de tension et/ou le rapport d'onde stationnaire de tension sur la base de la tension d'onde progressive (V1), de la tension d'onde réfléchie (V2) et de l'impédance interne (Z0) de la section de source d'énergie haute fréquence.

3. Dispositif d'alimentation en énergie électrique sans contact, du type à couplage électrostatique, selon la revendication 1 ou la revendication 2, dans lequel le moyen de commande de calcul (6) produit les paramètres de l'impédance côté charge (ZL) et de la tension de sortie (V1) de la section de source d'énergie haute fréquence et conserve une carte des fréquences pour obtenir la valeur de fréquence cible de la section de source d'énergie haute fréquence, et commande la fréquence de sortie de manière à ce qu'elle corresponde à la valeur de fréquence cible obtenue en utilisant la carte des fréquences.

4. Dispositif d'alimentation en énergie électrique sans contact, du type à couplage électrostatique, selon la revendication 3, dans lequel le moyen de commande de calcul (6) produit les paramètres de l'impédance côté charge (ZL) et de la tension de sortie (V1) de la section de source d'énergie haute fréquence et conserve une carte des tensions pour la valeur de tension cible pour la tension reçue (V3), et fait en sorte que la section de source d'énergie haute fréquence fournisse de l'énergie électrique présentant une fréquence de sortie qui correspond à la valeur de fréquence cible et la valeur de tension cible obtenue en utilisant la carte des tensions et, lorsque la tension reçue ne correspond pas à la valeur de tension cible, ajuste avec précision la fréquence de sortie.

5. Dispositif d'alimentation en énergie électrique sans contact, du type à couplage électrostatique, selon l'une quelconque des revendications 1 à 4, dans lequel le moyen de détection de tension (4) inclut :

un coupleur bidirectionnel (41) qui est monté en série entre la section de source d'énergie haute fréquence (25) et le circuit résonant série (29), et un dispositif de mesure de tension (45) qui mesure la tension d'onde progressive (V1) et la tension d'onde réfléchie (V2) séparées par le coupleur bidirectionnel.

6. Dispositif d'alimentation en énergie électrique sans contact, du type à couplage électrostatique, selon l'une quelconque des revendications 1 à 5, dans lequel le moyen de détection de tension auxiliaire (5) inclut :

une électrode auxiliaire (51) qui est située en face, et à une distance, de l'électrode (31) de réception d'énergie électrique montée dans la section fixe (2), et un dispositif de mesure de tension (55) destiné à mesurer la tension auxiliaire (V4) induite aux bornes de l'électrode auxiliaire (51).

7. Procédé de commande d'un dispositif (1) d'alimentation en énergie électrique sans contact, du type à couplage électrostatique, comprenant :

une électrode (21) d'alimentation en énergie électrique placée sur une section fixe (2), une section (25) de source d'énergie haute fréquence destinée à alimenter en énergie haute fréquence l'électrode d'alimentation en énergie électrique, une électrode (31) de réception d'énergie électrique destinée à recevoir de l'énergie haute fréquence sans contact, qui est située en face, et à une distance, de l'électrode d'alimentation en énergie électrique et qui est placée sur une section mobile (3) qui est monté de manière mobile sur la section fixe, une section (35) de conversion d'énergie électrique reçue qui fournit de l'énergie électrique à un consommateur de courant (91) sur la section mobile après avoir converti l'énergie haute fréquence reçue par l'électrode de réception d'énergie électrique, une inductance de résonance (29) formant un circuit résonant série de condensateurs (C1) montés en série configurés depuis l'électrode d'alimentation en énergie électrique et l'électrode de réception d'énergie électrique ;

dans lequel le procédé de commande du dispositif d'alimentation en énergie électrique sans contact, du type à couplage électrostatique, comprend :

une étape de détection de tension qui détecte la tension d'onde progressive (V1) de l'onde progressive circulant de la section de source d'énergie haute fréquence vers le circuit résonant série et, dans le sens contraire, la tension d'onde réfléchie (V2) de l'onde réfléchie circulant entre la section (25) de source d'énergie haute fréquence et le circuit résonant série (29),

une étape de détection de tension auxiliaire qui détecte sans contact la tension reçue (V3) générée aux bornes de l'électrode de réception d'énergie électrique sur la section fixe, et

une étape de commande de calcul qui calcule l'impédance côté charge (ZL) incluant le circuit résonant série sur la base de la tension d'onde progressive et de la tension d'onde réfléchie, détermine l'état de résonance du circuit résonant série sur la base de la tension reçue, et commande de manière variable au moins la fréquence de sortie ou la tension de sortie de la section de source d'énergie haute fréquence sur la base de l'impédance côté charge et de l'état de résonance.

[FIG. 1]

[FIG. 2]

1

FIXED SECTION 2 ←—·—→ MOVABLE SECTION 3

251  421  41  422  29  21  31  351  352

25

45    55

6

4    5

[FIG. 3]

7

→ V1

V2 ←

72    29  21  31  73

71    Z0  L1  C1  RL

4

ZL    V3    LL

L1  C1

74

[FIG. 4]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090302690 A1
- JP 2011223739 A